# EUROPÄISCHE PATENTANMELDUNG

(11) **EP 4 749 518 A1**
(43) Veröffentlichungstag der Anmeldung: **27.05.2026**
(21) Anmeldenummer: 24215399.7
(22) Anmeldetag: 26.11.2024
(51) Int. Cl.: G06K 19/077

(54) **MIKROWELLENTAUGLICHES INLAY**

(71) Anmelder: etifix GmbH, 72661 Grafenberg (DE)
(72) Erfinder: Bohn, Martin, 72762 Reutlingen (DE)
(74) Vertreter: Christ, Niko

(57) **Zusammenfassung**

Die Erfindung betrifft ein mikrowellentaugliches Inlay, das einen RFID-Chipeine Antenne und ein Substrat mit speziellen Abschirmflächen umfasst. Diese Abschirmflächen sind so angeordnet, dass sie Mikrowellenstrahlung blockieren, während die Kommunikation im HF/NFC- und UHF-Bereich weiterhin möglich bleibt. Das Inlay ist dünn, mechanisch und thermisch haltbar und kann ohne zusätzlich unterzulegende Abschirmelemente verwendet werden. Es ist insbesondere für die Verwendung mit und die Integration in wiederverwendbarem Mikrowellengeschirr vorgesehen, um eine zuverlässige Identifikation und ein Schreiben und/oder Auslesen auch zusätzlicher Informationen zu ermöglichen.

## Beschreibung

Die vorliegende Erfindung betrifft ein mikrowellentaugliches Inlay, umfassend einen RFID-Chip, eine mit diesem elektrisch oder magnetisch verbundene Antenne und ein flächenparallel angeordnetes erstes Substrat mit Abschirmflächen, wobei der RFID-Chip mit der Antenne auf dem ersten Substrat aufgebracht ist und zwei benachbarte Abschirmflächen zwischen sich jeweils einen Zwischenraum aufweisen.

Ein solches Inlay ist bereits aus der EP 4 120 133 B1 vorbekannt. Dieses ist für den Einsatz auf wiederverwendbarem Mikrowellengeschirr vorgesehen. Solche Verpackungen ermöglichen den Kauf von verzehrfertigen, frisch zubereiteten Nahrungsmitteln, die zusammen mit dem Geschirr abgegeben werden. Dieses Mikrowellengeschirr wird üblicherweise in einem Pfandsystem ausgegeben. Das bekannte Inlay dient in einem Smart Label der Identifizierung des Geschirrs als zum Betrieb und dem zugehörigen Pfandsystem gehörig und kann gegebenenfalls auch zur Kategorisierung des Geschirrs verwendet werden.

Es ist hierbei vorgesehen, dass das Mikrowellengeschirr einem bestimmten Restaurant zugeordnet werden soll, um zu vermeiden, dass sich fremdes Geschirr bei einem anderen Anbieter sammelt. Zudem soll nur solches Geschirr zurückgenommen werden, das überhaupt für die Rücknahme vorgesehen ist. Dies wird im Stand der Technik bereits vielfältig mit RFID-Chips (Radio Frequency Identification-Chips) gelöst, die in Smart Labels mit einer Antenne auf einem Substrat angeordnet und damit zu einem Inlay zusammengefasst sind.

Durch ein entsprechendes Schreib-Lesegerät ist der RFID-Chip in herkömmlicher Art und Weise beschreibbar oder auslesbar.

Ein RFID-Chip hat keine eigene Stromquelle, sondern empfängt mit seiner Antenne Energie zum Auslesen von dem Kommunikationspartner, der diese mit einem Schreib-Lesegerät über ein elektromagnetisches Feld bereitstellt. Diese Energie reicht aus, um den Speicher des RFID-Chips zu beschreiben oder auszulesen und über die Antenne ein Antwortsignal zu senden.

Die EP 4 120 133 B1 behandelt das Problem, dass beim Erwärmen in der Mikrowelle, beispielsweise wenn verzehrfertige Nahrungsmittel erneut aufgewärmt werden sollen, das Problem auftritt, dass auch die Mikrowellenstrahlung in die Antenne eingekoppelt wird. Diese Strahlung kann genügend Energie übertragen, um das Inlay zu beschädigen oder zu zerstören. Hierfür schlägt die EP 4 120 133 B1 vor, ein zusätzliches Abschirmelement bereitzuhalten und unter das Inlay zu legen, so dass das Inlay zwischen mit dem Inlay verbundenen Abschirmflächen und dem untergelegten Abschirmelement eingeschlossen ist, so lange es in dem Mikrowellenofen aufgenommen ist. Dies stellt jedoch einen Nachteil insoweit dar, als bei einem Weglassen des untergelegten Abschirmelements das Inlay beschädigt werden kann.

Um diese Fehlerquelle auszuschließen, schlägt eine weitere Entwicklung vor, das Inlay auf Folienabschnitte zu kleben, die einander überlappen und in der Mitte der ringförmigen Antenne eine Aussparung aufweisen. Dadurch werden der RFID-Chip und die Antenne ausreichend abgeschirmt, sodass auf das untergelegte Abschirmelement verzichtet werden kann, während durch die Überlappung eine Kommunikation weiter ermöglicht ist. Während die Mikrowellenstrahlung den Zwischenraum der überlappenden Schichten nicht passieren kann und von diesen abgeleitet wird, können die Wellen des Inlays, soweit es sich um ein HF-Inlay (Hochfrequenz-Inlay) oder NFC-Inlay (Near Field Communication-Inlay) handelt, dennoch den Bereich des Inlays verlassen und von einem Lesegerät erfasst werden.

Es hat sich gezeigt, dass eine HF/NFC-Kommunikation im Bereich 13,56 MHz zwar so möglich ist, dass sich aber RFID-Inlays im UHF-Bereich (Ultrahochfrequenzbereich) im Bereich 860-960 MHz mit dieser Lösung nicht betreiben lassen.

Vor diesem Hintergrund liegt der vorliegenden Erfindung die Aufgabe zu Grunde, ein mikrowellentaugliches Inlay zu schaffen, welches sowohl zuverlässig beidseitig ohne ein separat untergelegtes Abschirmelement gegenüber Mikrowellen abgeschirmt wird, als auch eine Kommunikation sowohl im HF/NFC-Bereich, als auch im UHF-Bereich durch die Abschirmung hindurch erlaubt.

Gelöst wird diese Aufgabe durch ein mikrowellentaugliches Inlay gemäß den Merkmalen des unabhängigen Anspruchs 1. Sinnvolle Ausgestaltungen eines solchen Inlays können den sich anschließenden abhängigen Ansprüchen entnommen werden.

Vorgesehen ist insoweit ein mikrowellentaugliches Inlay, umfassend einen RFID-Chip, eine mit diesem elektrisch oder magnetisch verbundene Antenne und ein flächenparallel angeordnetes erstes Substrat mit Abschirmflächen, wobei der RFID-Chip mit der Antenne auf dem ersten Substrat aufgebracht ist und zwei benachbarte Abschirmflächen zwischen sich jeweils einen Zwischenraum aufweisen. Erfindungsgemäß ist ein solches mikrowellentaugliches Inlay dadurch gekennzeichnet, dass die Abschirmflächen auf dem ersten Substrat so angeordnet sind, dass sie jeden geradlinigen, ausschließlich entlang der Zwischenräume verlaufenden Weg durch die Abschirmflächen versperren.

Es ergibt sich dadurch, dass die Zwischenräume so konzipiert sind, dass keine Mikrowellenstrahlung durch die Abschirmflächen des ersten Substrats durchgelassen wird, wohingegen das Inlay weiterhin senden und empfangen kann. Es stellt den Extremfall dar, wenn Mikrowellenstrahlen in den Zwischenräumen auftreten können und in diesem Bereich in die Antenne eingekoppelt werden. Dem wird aber begegenet, indem gerade Wege durch diese Zwischenräume durch die Formgebung und Anordnung der Abschirmflächen versperrt sind. Das Inlay ist also durch diese spezielle Form der Abschirmung geschützt, kann aber seinerseits in seinem gesamten Spektrum senden und empfangen, sei es im HF/NFC- oder im UHF-Bereich. Das Inlay ist in einer solchen Anordnung geschützt und wird im Mikrowellenofen nicht beschädigt oder zerstört.

Bevorzugtermaßen kann der RFID-Chip gemeinsam mit der Antenne direkt auf dem ersten Substrat auf dessen von den Abschirmflächen abgewandter Seite aufgebracht sein. Eine derartige Anordnung verhindert Kurzschlüsse zwischen dem RFID-Chip und den Abschirmflächen und gewährleistet trotzdem, dass der RFID-Chip Daten senden und empfangen kann. Dadurch, dass der RFID-Chip mit seiner Antenne direkt auf der einen Seite des ersten Substrats angeordnet ist und die Abschirmfläche auf der gegenüberliegenden Seite derselben Substratschicht, wird ein extrem dünnes Inlay geschaffen, das als solches als eine einzige Schicht verwendet werden kann. Ein so extrem dünn auftragendes Inlay bietet nur wenig Angriffsfläche gegen ein Ablösen, insbesondere Abschälen, von der beklebten Oberfläche, so dass die mechanische und thermische Haltbarkeit hierdurch deutlich verbessert ist, wie zum Beispiel bei einem Spülvorgang in einer Spülmaschine. Soweit auf eine Deckschicht verzichtet werden kann, wird lediglich noch eine Klebstoffschicht als Haftvermittler mit der Oberfläche benötigt.

In einer alternativen Ausgestaltung kann der RFID-Chip mit einer Antenne verbunden sein, die auf beiden Seiten eines zweiten Substrats aufgebracht ist und dieses auf dem ersten Substrat auf dessen den Abschirmflächen gegenüberliegenden Seite aufgebracht, vorzugsweise aufgeklebt, ist. Dies erlaubt es, Abschirmfläche und RFID-Chip mit Antenne separat voneinander herzustellen und in einem zusätzlichen Arbeitsschritt zusammenzufügen. Im Ergebnis kann so beispielsweise der RFID-Chip oder die Abschirmfläche zwischen dem ersten und dem zweiten Substrat eingeschlossen und damit zusätzlich geschützt sein, oder eine doppellagige Substratschicht zwischen diesen Seiten gebildet sein.

Ein direktes Aufbringen der Antenne auf die Abschirmelemente sollte vermieden werden, um keine Kurzschlüsse zu erzeugen.

Die Antenne kann, insbesondere bei HF/NFC-Antennen, auf dem zweiten Substrat beidseitig aufgebracht sein und die Abschirmflächen auf dem ersten Substrat auf dessen von dem RFID-Chip und der Antenne abgewandter Seite aufgebracht sein. So können unter Verwendung des zweiten Substrats auch doppelschichtige Antennen mit dem erfindungsgemäßen Verfahren zu einem immer noch sehr dünnen Inlay aus lediglich zwei Substratschichten zusammengefügt sein.

In konkreter Ausgestaltung können die Abschirmflächen kreisrund, oval oder als regelmäßiges Vieleck, insbesondere als Sechseck ausgeführt sein, sodass jede dieser Abschirmflächen von sechs benachbarten Abschirmflächen umgeben ist. Alternativ können die Abschirmflächen auch aus frei geformten Konturen bestehen. Eine kreisrunde Ausführung der Abschirmflächen ist insofern vorteilhaft, da auf diese Weise ein Funkenschlag von Ecke zu Ecke vermieden werden kann, der im Ergebnis das Inlay zerstören könnte. Gleichfalls können aber prinzipiell auch ovale, regelmäßig mehreckige oder auch frei geformte Abschirmflächen auf das Substrat aufgebracht werden. Gerade bei sechseckigen Abschirmflächen kann vorgesehen sein, dass diese ein Wabenmuster ausbilden. Auch in einem Wabenmuster sind die Abschirmflächen so angeordnet, dass die Aussparungen nicht am Stück auf geradem Weg durch einen aus den Abschirmflächen gebildeten Metallschirm hindurch verlaufen, sondern dass jeder gerade Weg durch den Metallschirm von einer Abschirmfläche versperrt wird. Folglich kann der RFID-Chip auch in einer solchen Modifikation verlässlich vor Mikrowellenstrahlung geschützt werden.

Die Abschirmflächen entlang einer Reihe können einen Abstand von Mittelpunkt zu Mittelpunkt einnehmen, der größer ist als der Durchmesser der einzelnen Abschirmflächen, während der Abstand einer Reihe zu einer benachbarten Reihe kleiner ist als der Durchmesser der einzelnen Abschirmflächen. Die Größenverhältnisse und die hierdurch ineinandergeschobenen Reihen gewährleisten bei regelmäßigen Anordnungen der Abschirmflächen eine zuverlässige Abschirmung von störender Mikrowellenstrahlung und gleichzeitig kann die Kommunikation des RFID-Chips über seine Antenne zwischen den Abschirmflächen hindurch erfolgen.

Mit einigem Vorteil kann der Zwischenraum zwischen den Abschirmflächen zwischen 0,5 mm und 5 mm Breite liegen und es kann vorgesehen sein, dass die Abschirmflächen zwischen 65 und 75 Prozent, vorzugsweise 70 Prozent der Fläche des Substrats einnehmen. Der begrenzte Zwischenraum zwischen den Abschirmflächen gewährleistet, dass die störende Mikrowellenstrahlung abgeschirmt wird. Insbesondere vorteilhaft ist es, wenn die Fläche des Substrats zu 70 Prozent mit den metallischen Abschirmflächen belegt ist und aus 30 Prozent freier Fläche besteht.

Die Abschirmflächen können aus Kupfer oder Aluminium, vorzugsweise aus 8 bis 10 µm dickem Aluminium hergestellt und auf das erste Substrat durch Ätzverfahren, Ausstanzen oder Aufkleben aufgebracht sein. In einer weiteren Ausführungsform können die Abschirmflächen aus einer leitfähigen Farbe gedruckt sein.

Soweit das Inlay in einem In-Mould-Verfahren eingegossen oder ohne Schutzschichten eingesetzt werden soll, kann ein derart gestaltetes Inlay mikrowellengeschützt basierend auf einer oder auf zwei Schichten aufgebaut sein. Auch im Boden oder der Wandung eines mikrowellentauglichen Behälters oder Geschirrteils aus Kunststoff, Glas oder Porzellan kann das mikrowellengeschützte Inlay stoffschlüssig sichtbar oder unsichtbar eingebracht werden.

Soweit das Inlay aber nicht in seinem Minimalzustand verwendet werden soll, insbesondere eine Schutzschicht oder ein Druck aufgebracht werden soll, kann konkret vorgesehen sein, dass das erste Substrat mit den Abschirmflächen, dem aufgebrachten RFID-Chip und der Antenne gemeinsam von einer Deckschicht aus bedrucktem oder unbedrucktem Gussacrylat überzogen ist, wobei entweder die Abschirmflächen oder der RFID-Chip mit der Antenne der Deckschicht zugewandt sind. Die Auslesbarkeit des Inlays ist in beiden Ausrichtungen ohne Weiteres gegeben, so dass es keine Rolle spielt, von welcher Seite das Inlay ausgelesen wird. Ferner kann, gerade bei einer bedruckten Deckschicht eine zusätzliche Schutzschicht aufgebracht sein, die den Druck schützt.

Mit einer auf dem ersten Substrat aufgebrachten Klebeschicht, die durch ein leicht ablösbares Trägerpapier gegen ein unbeabsichtigtes Anhaften geschützt werden kann, kann das Inlay auf einem Gegenstand wie etwa einem Mikrowellengeschirrteil angebracht werden.

Der Schreib-Lesebereich des mikrowellentauglichen RFID-Inlays kann fixe Informationen enthalten, die nach der ersten Programmierung schreibgeschützt sind, wie beispielsweise Behälter-ID, Material und Hersteller oder Gewicht und auch variable Informationen, die in einem Mehrwegumlauf immer wieder neu programmiert werden müssen, wie beispielsweise Anzahl der Umläufe, Inhalte und Zubereitungs-Informationen, die eine Scan-to-Cook-Technologie in den Mikrowellengeräten unterstützen. Die gespeicherten Informationen können über HF/NFC-fähige Smartphones oder UHF-Reader programmiert und ausgelesen und an die Mikrowellengeräte zur Einstellung von Leistung, Zeit und Bewegungsmuster gesendet werden. Ebenfalls kann vorgesehen sein, dass das mikrowellentaugliche RFID-Inlay auf dem mikrowellentauglichen Behälter die notwendigen Informationen zur Zubereitung der Inhalte direkt an eine in der Mikrowelle eingebaute Leseeinheit senden kann. Die mikrowellentauglichen Inlays können auch in zugelassenen, mikrowellentauglichen Einwegverpackungen eingesetzt werden und fixe und variable Informationen zum Auslesen bereithalten.

Die vorstehend beschriebene Erfindung wird im Folgenden anhand eines Ausführungsbeispiels näher erläutert.

Es zeigen
- Figur 1: ein erfindungsgemäßes Inlay in schematischer Darstellung in einer Draufsicht mit einem RFID-Chip und einer Antenne, das auf einem ersten Substrat mit kreisrunden Abschirmflächen aufgebracht ist,
- Figur 2: eine alternative Ausführungsform des Inlays gemäß Figur 1 mit sechseckigen, wabenförmig angeordneten Abschirmflächen,
- Figur 3: ein Smart Label in einer schematischen, seitlichen Querschnittsdarstellung mit einer erfindungsgemä-ßen Ausführungsform eines RFID-Inlays, in der die unterschiedlichen Schichten gezeigt sind mit einer Antenne auf einer Seite des ersten Substrats, sowie
- Figur 4: ein Smart Label in einer schematischen, seitlichen Querschnittsdarstellung mit einem erfindungsgemä-ßen RFID-Inlay, in der die unterschiedlichen Schichten gezeigt sind, mit einer Antenne auf beiden Seiten eines zweiten Substrats.

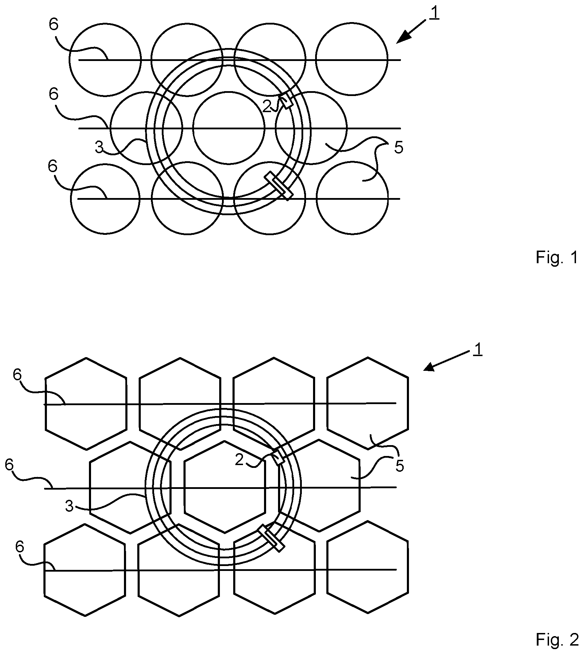

Figur 1 zeigt ein Inlay 1, welches zur Verwendung an einem Mikrowellengeschirr hergerichtet ist. Hierzu wird das Inlay 1 an einer vom Betrachter abgewandten Unterseite über eine Klebstoffschicht 10 auf dem Mikrowellengeschirr angebracht. Das Inlay 1 umfasst einen RFID-Chip 2 zur Kommunikation mit einem Lesegerät. Diese Kommunikation bewerkstelligt der RFID-Chip 2 unter Zuhilfenahme einer Antenne 3. Der RFID-Chip 2 und die Antenne 3 sind gemeinsam mit einem ersten Substrat 4, welches vorzugsweise aus PET (Polyethylenterephthalat) hergestellt ist, zu dem erfindungsgemäßen Inlay 1 zusammengefasst. Auf der gegenüberliegenden Seite des ersten Substrats 4 sind zur Abschirmung vor der Mikrowellenstrahlung runde Abschirmflächen 5 aus Aluminium angeordnet, die Zwischenräume zwischen diesen Abschirmflächen 5 freilassen, wobei die Abschirmflächen 5 in versetzten Reihen 6 beabstandet angeordnet sind. Die Abschirmflächen 5 sind somit in einem Muster angeordnet, in dem die Abschirmflächen 5 innerhalb einer Reihe 6 um mehr als den Durchmesser einer Abschirmfläche 5 von Mittelpunkt zu Mittelpunkt voneinander beabstandet sind, während benachbarte Reihen 6 jeweils um weniger als den Durchmesser einer Abschirmfläche 5 voneinander beabstandet sind, sodass die Abschirmfläche 5 jeder zweiten Reihe 6 jeweils miteinander fluchtend angeordnet sind. Auf diese Weise können Mikrowellen nicht entlang der Zwischenräume durch das Inlay 1 mit seinen Abschirmflächen 5 hindurchdringen, die Abschirmflächen 5 bilden letztlich für die Mikrowellenstrahlung einen Metallschirm. Eine HF/NFC- und eine UHF-Kommunikation kann allerdings diesen Metallschirm dennoch durchdringen, so dass zwar Mikrowellenstrahlung das Inlay 1 nicht beschädigen, die Kommunikation aber ungehindert stattfinden kann.

Figur 2 zeigt eine alternative Ausführungsform des aus Abschirmflächen 5 gebildeten Inlays 1. Hierbei sind die Abschirmflächen 5 als Sechsecke ausgebildet, sodass ein Wabenmuster gebildet ist. Die Sechsecke bilden alternierende Reihen 6, die in einer abwechselnden Schichtenfolge angeordnet sind. Das erste Substrat 4 weist ein gleichmäßiges Muster aus Abschirmflächen 5 mit Zwischenräumen auf. Die Abschirmflächen 5 sind so angeordnet, dass die Zwischenräume nicht fluchtend in eine Richtung angeordnet sind. Vielmehr blockiert nach kurzer Wegstrecke, etwa nach dem Passieren einer ersten Abschirmfläche 5, eine benachbarte Abschirmfläche 5 ein weiteres Fortschreiten eines Mikrowellenstrahls, so dass diese immer wieder auf die auf dem Substrat 4 angeordneten Abschirmflächen 5 treffen. Ein Einkoppeln der Energie des Mikrowellenstrahls in das Inlay 1, also in den RFID-Chip 2 über die Antenne 3, kann daher ausgeschlossen werden.

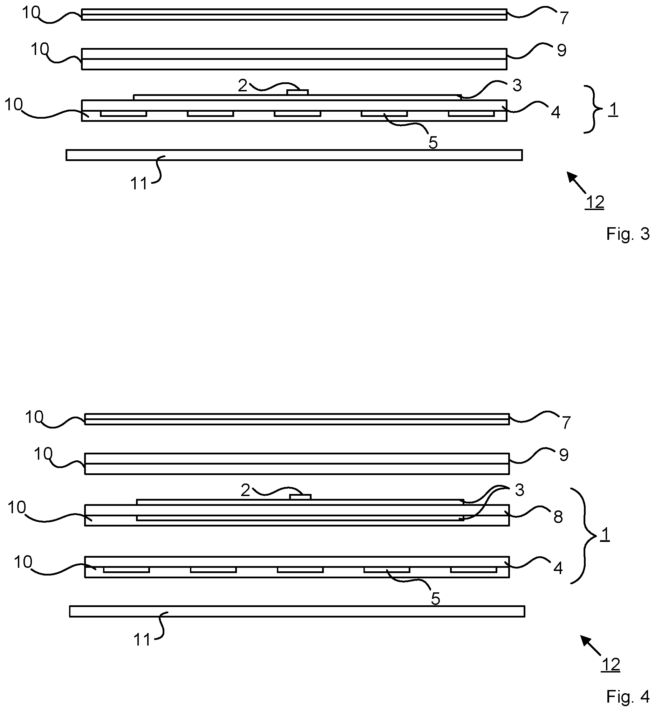

Figur 3 zeigt den Querschnitt eines Smart Labels 12 unter Verwendung eines erfindungsgemäßen Inlays 1. Auf einem ersten Substrat 4 sind auf jeweils gegenüberliegenden Seiten Abschirmflächen 5 und ein RFID-Chip 2 mit einer Antenne 3 direkt angeordnet, da die Antenne nur auf einer Seite des ersten Substrats 4 aufgebracht ist. Die Abschirmflächen 5 bestehen aus ausgestanztem und aufgeklebtem, oder auf das erste Substrat 4 ausgeätztem Aluminium. Durch die spezielle Anordnung kann ein Kurzschluss zwischen den metallischen Abschirmflächen 5 und der Antenne 3 vermieden werden, dennoch ist hier die RFID-Kommunikation in beiden Richtungen durch die Abschirmung möglich und die Abschirmung gegen die Mikrowellenstrahlung wirksam. Das Inlay 1 ist hier mit einer Deckschicht 9 und einer Schutzfolie 7 zu einem Smart Label 12 zusammengefasst. Zwischen den Schichten 7 und 9 und den Schichten 9 und 4 sind Klebstoffschichten 10 angeordnet, ebenso wie unter dem ersten Substrat 4, um das Smart Label 12 auf eine ausgewählte Oberfläche aufkleben zu können. Ein Trägerpapier 11 schützt vor einem versehentlichen Anhaften des Smart Labels.

Figur 4 zeigt den Querschnitt eines Smart Labels 12 unter Verwendung des erfindungsgemäßen Inlays 1. Eine Antenne 3 und ein RFID-Chip 2 sind auf einem zweiten Substrat 8 aufgebracht, wobei die Antenne 3 beidseitig auf dem zweiten Substrat 8, etwa durch Ätzen, aus Aluminium hergestellt ist. Dieses zweite Substrat 8 ist zudem mit einer Klebstoffschicht 10 auf einem ersten Substrat 4 aufgebracht, welches auf der dem zweiten Substrat 8 gegenüberliegenden Seite Abschirmflächen 5 aufweist. Das Inlay 1 ist zudem über eine Klebstoffschicht 10 mit einem Trägerpapier 11, etwa einem Glassinepapier lösbar verbunden. Über das Inlay 1 ist zudem eine Deckschicht 9, vorzugsweise aus Gussacrylat, geklebt. Optional kann das Ganze von einer Schutzfolie 7 überzogen sein, um einen auf dem Gussacrylat angebrachten Druck zu schützen. Zwischen den Schichten 11, 4, 8, 9 und 7 sind zur Verbindung jeweils Klebstoffschichten 10 vorgesehen, welche je nach Anwendung aus unterschiedlichen Klebstoffen hergestellt sein können. Auf diese Weise entsteht ein Smart Label 12, welches in beiden Richtungen durch die Abschirmung senden und empfangen kann, aber unanfällig für Mikrowellenstrahlung ist.

Vorstehend beschrieben ist somit ein dünnes Inlay, welches seine Antenne und seinen RFID-Chip sowohl zuverlässig ohne untergelegtes Abschirmelement gegenüber Mikrowellen abschirmt, als auch eine bidirektionale Kommunikation durch die Abschirmung hindurch sowohl im HF/NFC-Bereich, als auch im UHF-Bereich erlaubt.

### BEZUGSZEICHENLISTE

- 1: Inlay
- 2: RFID-Chip
- 3: Antenne
- 4: erstes Substrat
- 5: Abschirmfläche
- 6: Reihe
- 7: Schutzfolie
- 8: zweites Substrat
- 9: Deckschicht
- 10: Klebstoffschicht
- 11: Trägerpapier
- 12: Smart Label

## Patentansprüche

1. Mikrowellentaugliches Inlay, umfassend einen RFID-Chip (2), eine mit diesem elektrisch oder magnetisch verbundene Antenne (3) und ein flächenparallel angeordnetes erstes Substrat (4) mit Abschirmflächen (5), wobei der RFID-Chip (2) mit der Antenne (3) auf dem ersten Substrat (4) aufgebracht ist und zwei benachbarte Abschirmflächen (5) zwischen sich jeweils einen Zwischenraum aufweisen,
**dadurch gekennzeichnet, dass** die Abschirmflächen (5) auf dem ersten Substrat (4) so angeordnet sind, dass sie jeden geradlinigen, ausschließlich entlang der Zwischenräume verlaufenden Weg durch die Abschirmflächen (5) versperren.

2. Inlay gemäß Anspruch 1, **dadurch gekennzeichnet, dass** der RFID-Chip (2) gemeinsam mit der Antenne (3) direkt auf dem ersten Substrat (4) auf dessen von den Abschirmflächen (5) abgewandter Seite aufgebracht ist.

3. Inlay gemäß Anspruch 1, **dadurch gekennzeichnet, dass** der RFID-Chip (2) gemeinsam mit der Antenne (3) auf ein zweites Substrat (8) und dieses auf dem ersten Substrat (4) auf dessen den Abschirmflächen gegenüberliegenden Seite aufgebracht, vorzugsweise aufgeklebt, ist.

4. Inlay gemäß Anspruch 3, **dadurch gekennzeichnet, dass** die Antenne (3) auf dem zweiten Substrat beidseitig aufgebracht ist und die Abschirmflächen (5) auf dem ersten Substrat (4) auf dessen von dem RFID-Chip (2) und der Antenne (3) abgewandter Seite aufgebracht sind.

5. Inlay gemäß einem der vorhergehenden Ansprüche, **dadurch gekennzeichnet, dass** die Abschirmflächen (5) kreisrund, oval oder als regelmäßiges Vieleck, insbesondere Sechseck, ausgeführt sind, sodass jede Abschirmfläche (5) von sechs benachbarten Abschirmflächen (5) in versetzten Reihen (6) umgeben ist.

6. Inlay gemäß Anspruch 5, **dadurch gekennzeichnet, dass** die Abschirmflächen (5) entlang einer Reihe (6) einen Abstand von Mittelpunkt zu Mittelpunkt einnehmen, der größer ist als der Durchmesser der einzelnen Abschirmflächen (5), während der Abstand einer Reihe (6) zu einer benachbarten Reihe (6) kleiner ist als der Durchmesser der einzelnen Abschirmflächen (5).

7. Inlay gemäß einem der Ansprüche 1 bis 4, **dadurch gekennzeichnet, dass** die Abschirmflächen (5) aus frei geformten Konturen bestehen.

8. Inlay gemäß einem der vorhergehenden Ansprüche, **dadurch gekennzeichnet, dass** benachbarte Abschirmflächen (5) einen Zwischenraum von 0,5 bis 5 mm Breite zwischen sich einschließen.

9. Inlay gemäß einem der vorhergehenden Ansprüche, **dadurch gekennzeichnet, dass** die Abschirmflächen (5) zwischen 65 und 75 Prozent, vorzugsweise 70 Prozent der Fläche des ersten Substrats (4) bedecken.

10. Inlay gemäß einem der vorhergehenden Ansprüche, **dadurch gekennzeichnet, dass** die Abschirmflächen (5) aus Kupfer oder Aluminium, vorzugsweise aus 8 bis 10 µm dickem Aluminium, im Ätzverfahren oder durch Ausstanzen und Aufkleben auf dem ersten Substrat (4) aufgebracht sind.

11. Inlay gemäß einem der Ansprüche 1 bis 9, **dadurch gekennzeichnet, dass** die Abschirmflächen (5) und/oder die Antenne (3) aus einer leitfähigen Farbe gedruckt sind.

12. Inlay gemäß einem vorhergehenden Anspruch, **dadurch gekennzeichnet, dass** das erste Substrat (4) mit den Abschirmflächen (5), dem aufgebrachten RFID-Chip (2) und der Antenne (3) gemeinsam von einer Deckschicht (9) aus bedrucktem oder unbedrucktem Gussacrylat überzogen ist, wobei entweder die Abschirmflächen (5) oder der RFID-Chip (2) mit der Antenne (3) der Deckschicht (9) zugewandt sind.

13. Inlay gemäß einem der vorhergehenden Ansprüche, **dadurch gekennzeichnet, dass** dem ersten Substrat (4) eine Klebstoffschicht (10) zugeordnet ist, welche zur Anbringung auf einem Untergrund, vorzugsweise einem Mikrowellengeschirrteil, hergerichtet ist.

14. Inlay gemäß einem der Ansprüche 1 bis 13, welches in den Boden oder die Wandung eines mikrowellentauglichen Behälters oder Geschirrteils aus Kunststoff, Glas oder Porzellan stoffschlüssig, sichtbar oder unsichtbar, eingearbeitet ist.

15. Inlay gemäß einem der vorhergehenden Ansprüche, **dadurch gekennzeichnet, dass** dem RFID-Chip ein Schreib-/Lesespeicher zugeordnet ist, dem Steuerbefehle zur Ansteuerung eines Mikrowellenofens zugeordnet sind.
